# EUROPÄISCHE PATENTSCHRIFT

(11) **EP 2 363 770 B1**
(45) Veröffentlichungstag und Bekanntmachung des Hinweises auf die Patenterteilung: **21.03.2012**
(21) Anmeldenummer: 11150579.8
(22) Anmeldetag: 11.01.2011
(51) Int. Cl.: G05B 19/042

(54) **Sicherheitsvorrichtung mit einer konfigurierbaren Sicherheitssteuerung**
Safety device with a configurable controller
Dispositif de sécurité doté d'un contrôleur configurable

(30) Priorität: 03.03.2010 DE 102010010014
(43) Veröffentlichungstag der Anmeldung: 07.09.2011
(73) Patentinhaber: SICK AG, 79183 Waldkirch (DE)
(72) Erfinder: Bornstein, Patrick, 79117 Freiburg (DE)
(74) Vertreter: Hehl, Ulrich

(56) Entgegenhaltungen:
- EP-A1- 1 936 457
- EP-A1- 2 098 924
- DE-A1- 19 745 163

## Beschreibung

Die Erfindung betrifft eine Sicherheitssteuerung mit einer konfigurierbaren Sicherheitssteuerung sowie ein Verfahren zum Konfigurieren einer Sicherheitssteuerung nach dem Oberbegriff von Anspruch 1 beziehungsweise 10.

Sicherheitssteuerungen dienen unter anderem dazu, bei Anliegen eines Gefahrensignals fehlerfrei auf eine vorgegebene Art zu reagieren. Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung erkennt, wie etwa ein Lichtgitter oder eine Sicherheitskamera. Erkennt ein solcher Sensor eine Gefährdung, so muss eine mit dem Sensor verbundene Sicherheitssteuerung absolut zuverlässig ein Abschaltsignal generieren.

In der Praxis überwacht zumeist nicht ein einzelner Sensor eine einzelne Maschine, sondern es müssen eine ganze Reihe von Gefährdungsquellen überwacht werden. Die entsprechende Vielzahl zugehöriger Sensoren, die jeweils ein Schaltereignis definieren können, und geeigneter Maßnahmen zur Beseitigung von Gefährdungen muss dann in der Sicherheitssteuerung konfiguriert und verschaltet werden.

Diese Programmierung der Sicherheitssteuerung wird durch professionelle grafische Programmieroberflächen unterstützt, die zumeist mit der Sicherheitssteuerung ausgeliefert werden. Die Norm IEC 61131 zur Programmierung von Steuerungssystemen beschreibt in IEC 61131-3 die grafische Programmierung mittels Funktionsbausteinen sowie in IEC 61131-2 eine IO-Schnittstellenbeschreibung in physikalisch-technischen Werten. Die Konfiguration der Eingangs- und Ausgangsbeschaltung und deren Schnittstellen zu Sensoren und Aktoren allerdings ist nicht standardisiert.

Die Programmierung ist ein zweistufiger Prozess. Zunächst werden von einem Steuerungsexperten am Schreibtisch die Anforderungen der Anlage spezifiziert und als Logikblöcke oder ähnliche Funktionsblöcke in der grafischen Programmieroberfläche eingegeben und verbunden. Im zweiten Schritt wird der Computer, vorzugsweise ein Notebook oder ein anderes tragbares Gerät, auf dem die grafische Programmieroberfläche implementiert ist, in die Maschinenhalle gebracht. Über eine Kabelverbindung mit der Sicherheitssteuerung wird das mit Hilfe der grafischen Programmieroberfläche erzeugte Steuerungsprogramm in die Sicherheitssteuerung übertragen. Derartige grafische Benutzeroberflächen sind beispielsweise aus der EP 1 936 457 A1 oder der EP 2 098 924 A1 bekannt.

Der Steuerungsexperte ist aber häufig nach der Erstinstallation nicht mehr verfügbar. Fällt eine Sicherheitssteuerung aus, oder muss eine Konfiguration verändert werden, so steht dem Wartungstechniker häufig weder das Wissen des Steuerungsexperten noch der Computer mit der grafischen Programmieroberfläche zur Verfügung. Noch schwieriger ist die Situation, wenn wie im Falle eines OEM-Herstellers eine Vielzahl gleichartiger Anlagen herzustellen ist und ein Fabrikarbeiter ohne vertiefte technische Ausbildung mit der Konfiguration betraut wird.

Ein herkömmlicher Ansatz zur Vermeidung dieser Nachteile ist das Anbringen eines mit Schraubenzieher zu bedienenden Drehschalters an der Sicherheitssteuerung. Jeder Drehposition ist ein bestimmtes Steuerungsprogramm zugeordnet. Dem Servicetechniker an der Sicherheitssteuerung wird durch Begleitdokumentation oder ein Flash-Programm erläutert, welche Drehstellung für welche Steuerungsanwendung zu wählen ist. Diese Konfiguration ist aber weder besonders komfortabel noch intuitiv, da der einzig nachvollziehbare Zusammenhang zwischen Drehschalterstellung und Steuerungsprogramm in der Begleitdokumentation besteht. Außerdem erlauben Drehschalter nur eine sehr kleine Auswahl verschiedener Steuerungsprogramme.

Daher lautet die Aufgabe der Erfindung, eine Konfigurationsmöglichkeit für Sicherheitssteuerungen zu schaffen, die weniger Expertenwissen und weniger apparativen Aufwand erfordert.

Diese Aufgabe wird durch eine Sicherheitsvorrichtung mit einer konfigurierbaren Sicherheitssteuerung gemäß Anspruch 1 und ein Verfahren zum Konfigurieren einer Sicherheitssteuerung gemäß Anspruch 10 gelöst. Dabei geht die Erfindung von dem Grundgedanken aus, das Ergebnis einer Programmierung mittels grafischer Programmieroberfläche in einer kompakten, leicht übertragbaren Information zusammenzufassen. Indem automatisch ein die Logikregeln und damit letztlich das Steuerungsprogramm repräsentierender Zahlencode generiert wird, bleibt die Flexibilität und der Komfort der grafischen Programmieroberfläche erhalten, und zugleich ist die eigentliche Programmierung der Sicherheitssteuerung auf die Eingabe dieses Zahlencodes reduziert.

Die Erfindung hat den Vorteil, dass die Erstellung der Logikregeln von der Konfiguration der Sicherheitssteuerung entkoppelt wird. Somit kann ein Steuerungsexperte den Zahlencode mit gewohnter Unterstützung durch grafische Programmierung erzeugen und damit effektiv und flexibel das erforderliche Programm erstellen, während die Programmierung der Sicherheitssteuerung selbst keiner besonderen Qualifikation mehr bedarf. Der Steuerungsexperte muss gar nicht mehr in die Nähe der Sicherheitssteuerung kommen und kann den erforderlichen Zahlencode beispielsweise auch telefonisch oder auf anderen Kommunikationskanälen übermitteln. Ebenso entfällt die Notwendigkeit einer Verbindung zwischen einer speziellen Konfigurationssoftware und der Sicherheitssteuerung.

Der Zahlencode ist bevorzugt mehrstellig und weist insbesondere 2 bis 10 Dezimalziffern auf. Ein solcher Zahlencode ist noch gut handhabbar und erlaubt zugleich eine für viele Anwendungen ausreichende Flexibilität in den codierbaren Logikregeln. Obwohl auch Zahlencodes mit bis zu 20 oder mehr Ziffern denkbar, ist hier bald die Schwelle überschritten, unter der ein Zahlencode noch leicht übertragen und geprüft werden kann.

Die Schnittstelle ist bevorzugt für den Anschluss eines mobilen Speichermoduls ausgebildet. So ist der Zahlencode komfortabel und ohne die Eingabe als mögliche Fehlerquelle übertragbar.

Die Schnittstelle weist bevorzugt ein Tastenfeld für das Heraufzählen und Herunterzählen eines Zahlencodes auf, insbesondere mit einer Taste zu Wahl der jeweils einzustellenden Ziffer. Das Eingabeprinzip ähnelt dabei der Einstellung von Uhrzeiten bei einer Digitaluhr. So lassen sich mit wenigen, kostengünstig herstellbaren Einstellungselementen auch mehrstellige Zahlencodes rasch und einfach eingeben.

Die Sicherheitssteuerung weist bevorzugt mehrere zur einer Reihe verbundene Anschlussmodule mit jeweils mindestens einem Eingang für den Anschluss eines Sensors und/oder mindestens einem Ausgang für den Anschluss eines Aktors auf. Mit den Anschlussmodulen kann auf einfache Weise eine Sicherheitssteuerung zusammengesetzt werden, welche die erforderliche Anzahl von Eingängen und Ausgängen anbietet.

Zusätzlich ist noch bevorzugter ein Kopfmodul vorgesehen, in dem die Steuerungseinheit untergebracht ist. Die Steuerungseinheit kann alternativ in einem der Anschlussmodule vorgesehen sein, beziehungsweise das Kopfmodul weist wie ein Anschlussmodul Ausgänge und Eingänge auf.

Vorteilhafterweise weist mindestens eines der Anschlussmodule eine Schnittstelle für die Eingabe eines Zahlencodes auf. Alternativ ist die Schnittstelle Teil des Kopfmoduls. Der Zahlencode gilt in den meisten Fällen für ein Steuerungsprogramm, welches für alle verbundenen Anschlussmodule als eine gemeinsame Sicherheitssteuerung gültig ist. Denkbar ist aber auch, mehrere Schnittstellen in mehreren Anschlussmodulen vorzusehen und sie auf diese Weise einzeln für den jeweiligen Anteil der Steuerungsaufgabe zu konfigurieren.

Die Konfigurationseinrichtung ist bevorzugt dafür ausgebildet, den Zahlencode mit einer Checksumme zu erzeugen, wobei die Sicherheitssteuerung dafür ausgebildet ist, die Checksumme eines an der Schnittstelle eingegebenen Zahlencodes zu prüfen. Mit dem Begriff Checksumme soll dabei jegliche Codierung umfasst sein, welche die Prüfung der Integrität eines Zahlencodes erlaubt. Auf diese Weise wird eine versehentliche Fehleingabe des Zahlencodes an der Schnittstelle vermieden. Ein sehr einfaches Beispiel ist, dem Zahlencode eine zusätzliche Ziffer mit der Quersumme der übrigen Ziffern hinzuzufügen.

Die Sicherheitssteuerung weist bevorzugt eine Anzeige für Zahlencodes auf, und die Steuerungseinheit ist dafür ausgebildet, erst dann ein Steuerungsprogramm mit den von einem an der Schnittstelle eingegebenen Zahlencode repräsentierten Logikregeln auszuführen, wenn eine Rückbestätigung eines angezeigten Zahlencodes erfolgt. Der Zahlencode wird so visuell überprüft, ehe die Rückbestätigung beispielsweise durch eine bestimmte Dauer und Reihenfolge einer Tastenbedienung erfolgt. Auch die Eingabe eines weiteren, speziellen Zahlencodes für die Authentifizierung ist denkbar.

In dem Zahlencode sind bevorzugt erste Bitblocks, welche eine Logikfunktion, zweite Bitblocks, welche eine Verbindungstabelle der Logikblocks, sowie dritte Bitblocks vorgesehen, welche den Typ eines Eingangs eines Logikblocks codieren. Logikfunktionen sind beispielsweise einfache UND- beziehungsweise ODER-Verknüpfungen. Die Verbindungstabelle legt fest, wie die Eingänge, die Logikfunktionen und die Ausgänge aufeinander verschaltet sind. Als Art der Eingänge schließlich kommen insbesondere einkanalige oder zweikanalige sowie getestete oder nicht getestete Eingänge in Betracht. Durch diese Codierung sind die wichtigsten Elemente der grafischen Programmierung in dem Zahlencode abgebildet.

Die Konfigurationseinrichtung ist bevorzugt dafür ausgebildet, Logikregeln mittels einer grafischen Programmieroberfläche durch Auswahl von Logikblocks, Eingängen von Logikblocks und Verbindungen zwischen Logikblocks festzulegen. Eine grafische Programmieroberfläche erleichtert das Entwerfen und Überprüfen der Logikregeln in erheblichem Maße. Umgekehrt können die in einem Zahlencode repräsentierten Logikregeln grafisch dargestellt werden. So kann der Code einer momentanen Konfiguration wieder in ein grafisches Programm übersetzt werden, um es zu modifizieren oder durch einen Steuerungsexperten prüfen zu lassen.

Die Konfigurationseinrichtung ist bevorzugt für einen Konsistenztest der Logikregeln ausgebildet, insbesondere dafür zu testen, ob alle Eingänge und Ausgänge von Logikblocks verbunden sind. Damit wird zumindest in vielen Fällen verhindert, dass ein unplausibles oder unsicheres Steuerungsprogramm entsteht. Die hier genannten Eingänge und Ausgänge eines Logikblocks dürfen nicht mit den Eingängen und Ausgängen der Sicherheitssteuerung verwechselt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die beiden Hauptschritte des Verfahrens, nämlich die Erzeugung des Zahlencodes mit Hilfe der Konfigurationseinrichtung und die Programmierung der Sicherheitssteuerung durch Eingabe des Zahlencodes können sowohl räumlich als auch zeitlich weit auseinander liegen. Beispielsweise ist denkbar, dass eine oder mehrere Konfigurationen von einem Steuerungsexperten entworfen und in Form einer betrieblichen Anweisung, einer Betriebsanleitung oder einer Schulung übergeben werden. Ein Servicemitarbeiter ohne tieferes technisches Verständnis kann dann an einem anderen Ort und zu einer anderen Zeit eine Sicherheitssteuerung durch Eingabe des Zahlencodes konfigurieren beziehungsweise programmieren.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung einer erfindungsgemäßen Sicherheits- steuerung mit Schnittstelle zur Eingabe eines Zahlencodes;
- Fig. 2: beispielhafte Logikregeln in der Ansicht einer grafischen Programmierober- fläche; und
- Fig. 3: eine modulare Sicherheitssteuerung mit Schnittstelle zur Eingabe eines Zahlencodes.

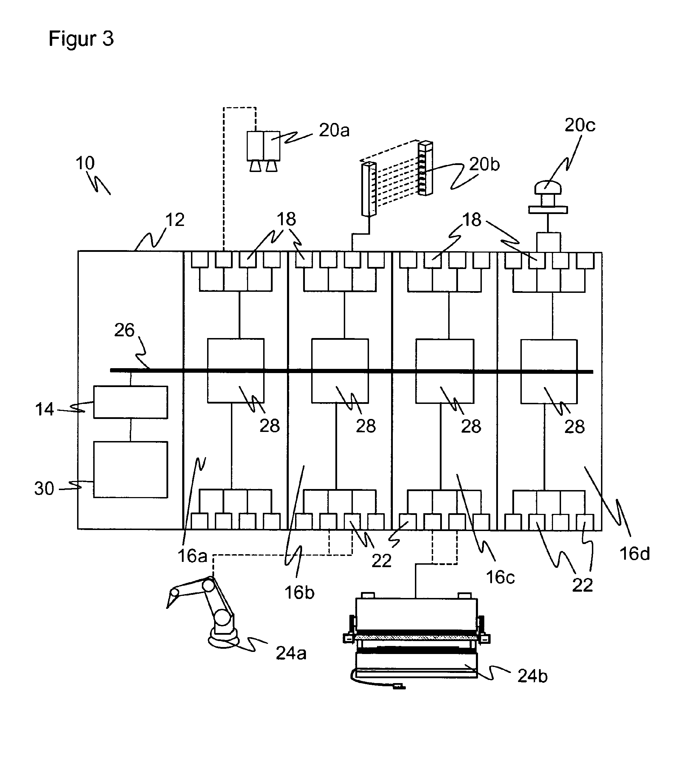

Figur 3 zeigt eine modulare Sicherheitssteuerung 10 mit einem Steuerungsmodul 12, welches eine sichere Steuerungseinheit 14 aufweist, also beispielsweise einen Mikroprozessor oder einen anderen Logikbaustein. Mit dem Steuerungsmodul 12 sind sequentiell vier Anschlussmodule 16a-d verbunden. In den Anschlussmodulen 16a-d sind Eingänge 18 zum Anschluss von Sensoren 20a-c und Ausgänge 22 zum Anschluss von Aktoren 24a-b vorgesehen. Im Gegensatz zu der Darstellung können sich die Anschlussmodule 16a-d in Art und Anzahl ihrer Anschlüsse unterscheiden und nur Eingänge, nur Ausgänge sowie eine Mischung aus beidem in unterschiedlicher Anzahl haben. Auch die Anordnung und die physische Ausbildung der Anschlussklemmen 18, 22 ist durch Wahl eines bestimmten Anschlussmoduls 16 anpassbar an verschiedene Steckertypen, Kabelgrößen und Signalarten. Schließlich sind die Module 12, 16a-d vereinfacht dargestellt und können weitere Elemente aufweisen, beispielsweise je eine LED für jeden Anschluss in übersichtlicher, die Zugehörigkeit optisch hervorhebender Anordnung.

Die Sicherheitssteuerung hat die Aufgabe, für einen sicheren Betrieb der Sensoren 20a-c und vor allem der Aktoren 24a-b zu sorgen, also Aktoren 24a-b sicherheitsgerichtet abzuschalten (der Ausgang 22 ist dann ein OSSD, Output Switching Signal Device), ein Not-Aus der Anlage sicher auszuführen, einer beliebigen Ansteuerung an einen Aktor 24a-b, besonders einem Einschalten oder einem Wiederhochfahren, zuzustimmen, Aktoren 24a-b freizugeben und dergleichen.

Ein Lichtgitter 20b, eine Sicherheitskamera 20a und ein Schalter 20c sind Beispiele für sicherheitsrelevante Sensoren oder Eingänge, welche ein Signal liefern können, auf das als Reaktion eine sicherheitsgerichtete Abschaltung erfolgt. Dies kann eine Unterbrechung der Lichtstrahlen des Lichtgitters 20b durch ein Körperteil, die Erkennung eines unzulässigen Eingriffs in einen Schutzbereich durch die Sicherheitskamera 20a oder ein Betätigen des Schalters 20c sein. An die Eingänge 18 können weitere Sicherheitssensoren beliebiger Art, wie Laserscanner, 3D-Kameras, Schaltmatten oder kapazitive Sensoren angeschlossen werden, aber auch sonstige Sensoren etwa zur Aufnahme von Messdaten oder einfache Schalter wie ein Not-Aus-Schalter. Alle derartigen Signalgeber werden hier und im Folgenden als Sensor bezeichnet.

Bei bestimmten Anwendungen sind auch Sensoren 20 an Ausgänge 22 und Aktoren 24 an Eingänge 18 angeschlossen, etwa um Testsignale zu übertragen, um einen Sensor 20 vorübergehend stumm zu schalten (muting), Teilbereiche aus dem Überwachungsbereich des Sensors 20 auszublenden (blanking), oder weil ein Aktor 24 neben einem Eingang für Ansteuerungen auch eigene Signalausgänge besitzt, mit denen er sich zum Teil selbst überwacht.

An Ausgänge 22 sind bevorzugt zweikanalig ein Roboter 24a und eine Abkantpresse 24b angeschlossen, die Beispiele für Bedienpersonal bei unzulässigem Eingriff gefährdende Aktoren darstellen. Diese Aktoren 24a-b können somit von der Sicherheitssteuerung 10 einen Abschaltbefehl erhalten, um sie bei Erkennung einer Gefährdung oder eines unzulässigen Eingriffs durch Sicherheitssensoren 20a-b abzuschalten oder in einen sicheren Zustand zu verbringen. Dabei kann das Lichtgitter 20a der Überwachung der Abkantpresse 24a und die Sicherheitskamera 20b der Überwachung des Roboters 24b dienen, so dass einander funktionell zugehörige Sensoren 20a-b und Aktoren 24a-b auch jeweils an einem Modul 16a bzw. 16b angeschlossen sind. Die funktionelle Zuordnung erfolgt aber über die Steuerungseinheit 14, so dass eine solche Abbildung der Anlage zwar übersichtlicher, keineswegs aber erforderlich ist. Weitere als die dargestellten Aktoren sind denkbar, und zwar sowohl solche, welche einen Gefahrenbereich erzeugen als auch andere, etwa eine Warnlampe, eine Sirene, eine Anzeige und dergleichen mehr.

Zwischen der Steuerungseinheit 14 und den Eingängen 18 bzw. den Ausgängen 22 besteht eine Backplane genannte serielle Kommunikationsverbindung 26, die insbesondere ein Bus ist und auf einem seriellen Standard, einem Feldbusstandard, wie IO-Link, Profibus, CAN oder auch einem proprietären Standard basieren und zusätzlich auch fehlersicher ausgelegt sein kann. Alternativ zu einem Bus kann auch eine direkte, eine parallele Verbindung oder eine sonstige den zu kommunizierenden Datenmengen und den erforderlichen Schaltzeiten entsprechende Verbindung 26 vorgesehen sein. Die Module 16a-d weisen eine eigene Steuerung 28 auf, um an der Buskommunikation teilnehmen zu können. Hierfür kann ein Mikroprozessor, ein FPGA, ein ASIC, eine programmierbare Logik oder ein ähnlicher digitaler Baustein vorgesehen sein. Die Steuerungen 28 können auch Auswertungsaufgaben übernehmen oder gemeinsam mit der Steuerungseinheit 14 verteilte Auswertungen vornehmen, die von einfachen Bool'schen Verknüpfungen bis hin zu komplexen Auswertungen, etwa einer dreidimensionalen Sicherheitskamera, reichen können.

Die Module 12, 16a-d sind jeweils in einheitlichen Gehäusen untergebracht und werden durch Anschlussstücke mechanisch und elektrisch miteinander verbunden. Das Steuerungsmodul 12 bildet somit den Kopf einer Modulreihe.

Sicherheitssteuerung 14, Eingänge 18, Ausgänge 22 und Bus 26 sind fehlersicher ausgebildet, also durch Maßnahmen wie zweikanalige Ausführung, durch diversitäre, redundante, selbstprüfende oder sonst sichere Auswertungen und Selbsttests. Entsprechende Sicherheitsanforderungen für die Sicherheitssteuerung sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

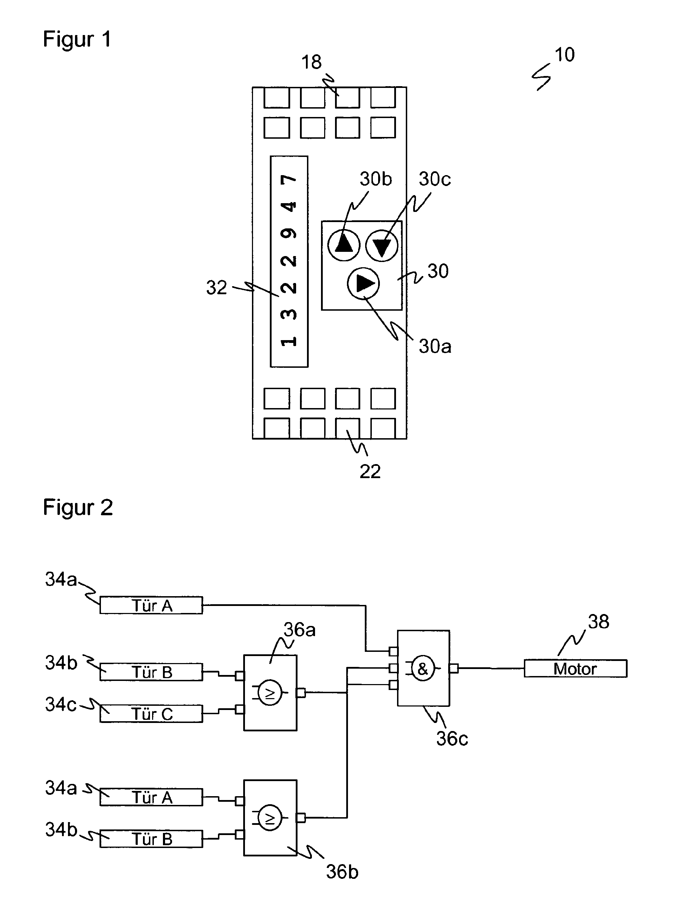

Erfindungsgemäß ist vorgesehen, die Konfiguration und Programmierung der Sicherheitssteuerung 10 über eine Schnittstelle 30 anhand eines Zahlencodes vorzunehmen, wie nun anhand der Figuren 1 und 2 näher erläutert.

Figur 1 zeigt eine vereinfachte Blockdarstellung einer Sicherheitssteuerung 10, die in diesem Fall nicht modular ausgebildet ist, oder alternativ ist Figur 1 auch als Darstellung nur eines der Anschlussmodule 16a-d zu verstehen. Dabei bezeichnen hier und im Folgenden gleiche Bezugszeichen die gleichen oder einander entsprechende Merkmale.

Die Schnittstelle 30 weist Bedienelemente 30a-c auf, um einen mehrstelligen Zahlencode einzugeben, der auf einer Anzeige 32 dargestellt ist. Mit einem Bedienelement 30a wird die aktuell einzugebende Ziffer ausgewählt, während mit den beiden anderen Bedienelementen 30b-c die ausgewählte Ziffer heraus- oder herabgezählt wird. Zum Abschluss einer Eingabe, deren Richtigkeit über die Anzeige 32 prüfbar ist, wird eine spezielle Kombination der Bedienelemente 30a-c betätigt. Diese Kombination ist nur aus Schulungen oder aus dem Handbuch bekannt und gewährt somit zumindest einen gewissen Schutz gegenüber ungewollten und nicht autorisierten Veränderungen oder Eingaben.

In einer alternativen, nicht dargestellten Ausführungsform ist die Schnittstelle für die Aufnahme eines mobilen Speichermoduls ausgebildet, beispielsweise als USB-Schnittstelle, als SD-Card-Slot oder dergleichen. Wird ein passendes Speichermodul mit einem Zahlencode eingesetzt, so wird der Zahlencode automatisch auf die Sicherheitssteuerung 10 übertragen und in der Anzeige 32 dargestellt. Wie in der anderen Ausführungsform überzeugt sich der Benutzer, ob dies der gewünschte Zahlencode ist, und bestätigt den Zahlencode durch Betätigung der speziellen Kombination der Bedienelemente 30a-c.

Der Zahlencode entspricht Logikregeln und spezifiziert damit ein Steuerungsprogramm, welches durch Eingabe des Zahlencodes in der Sicherheitssteuerung 10 für den weiteren Betrieb aktiviert wird.

Die Erzeugung des ein Steuerungsprogramm repräsentierenden Zahlencodes wird nun anhand der grafischen Darstellung einer beispielhaften grafischen Darstellung von Logikregeln in Figur 2 erläutert. Eine derartige Darstellung ist das Ergebnis einer grafischen Programmierung in einem Konfigurator, der beispielsweise auf einem PC, einem Notebook, einem PDA oder einem Mobiltelefon implementiert ist.

In dem Beispiel sind drei Eingänge 34a-c vorgesehen, die als "Tür A" bis "Tür C" bezeichnet sind. Diese werden durch Logikblöcke 36a-c miteinander verschaltet und so zu einem Ausgang 38 verrechnet.

Einfache UND- beziehungsweise ODER-Gatter sind die Mehrzahl der in sicherheitstechnischen Anwendungen benötigten Logikblöcke 36a-c. Komplexere Logikblöcke wie Muting oder Bypass sind seltener. Die Erfindung zielt zunächst auf einfachere Logikblöcke 36a-c, weil sich diese in einem kurzen Zahlencode codieren lassen und immer noch deutlich mehr Flexibilität erlauben als beispielsweise ein herkömmlicher Drehschalter. Prinzipiell sind aber auch komplexere Logikblöcke denkbar.

Bei der grafischen Programmierung wählt der Benutzer die gewünschten Eingänge 34a-c und legt ihren Typ fest, also beispielsweise ob sie ein- oder zweikanalig und ob sie getestet sind oder nicht. Über geeignete Logikblöcke 36a-c werden die Eingänge 34a-c miteinander verknüpft. So erhält der Benutzer eine große Flexibilität in den erstellbaren Steuerungsprogrammen.

Wenn der Benutzer die grafische Programmierung abschließen will, wird eine Compilierungsfunktion ausgelöst, welche die Eingänge 34a-c, die Logikblöcke 36a-c und deren Verbindungen in den mehrstelligen Zahlencode übersetzt. Vor dem Compilieren sind noch Plausibilitätstests des grafischen Programms denkbar, in denen beispielsweise der Benutzer darauf aufmerksam gemacht wird, wenn Eingänge oder Ausgänge von Logikblocks 36a-c nicht belegt sind.

In einer beispielhaften Codierung stehen jeweils 3 Bit für den Typ eines Logikblocks 36a-c, so dass acht verschiedene Logikblocks 36a-c wählbar sind. Sind n Logikblocks 36a-c vorgesehen, so verbrauchen sie demnach 3n Bit. Zur Vereinfachung hat jeder Logikblock 36a-c in der internen Repräsentation genau zwei Eingänge und einen Ausgang. Vor dem Benutzer kann diese Restriktion verborgen werden, indem beispielsweise beim Compilieren ein UND-Block mit drei Eingängen 34a-c durch eine geeignete serielle Verkettung zweier UND-Blocks mit je zwei Eingängen 34a-c ersetzt wird. Weitere Bits werden benötigt, um die Verbindungen zwischen den Logikblocks zu spezifizieren. Beispielsweise wird eine Zahlenreihe erzeugt, deren i-te Zahl das Ziel des Ausgangs des i-ten Logikblocks 36a-c bezeichnet. Die vier genannten möglichen Eingangstypen schließlich erfordern, da jeder Logikblock 36a-c zwei Eingänge 34a-c hat, 2*4 Möglichkeiten oder je 3 Bit, insgesamt folglich 3n Bit.

Somit können in einem 24-Bit-Zahlencode, der sieben dezimale Stellen hat, drei Logikblöcke 36a-c codiert werden. Selbstverständlich sind andere Codierungsschemata und andere Codelängen für beliebige Arten der grafischen Programmierung von Logikregeln möglich. Dem Zahlencode kann noch eine Sicherung hinzugefügt werden, beispielsweise eine Checksumme, um Eingabefehler zu vermeiden.

Der so berechnete Zahlencode wird angezeigt oder auf einem mobilen Speichermodul abgelegt und zu einem späteren Zeitpunkt über die Schnittstelle 30 auf die Sicherheitssteuerung 10 übertragen, welche daraufhin das zugehörige Steuerungsprogramm verwendet. Im Anschluss an eine Konfiguration ist in der Sicherheitstechnik ein Funktionstest üblich, in dem die Sensoren gezielt mit Prüfkörpern auf korrektes Abschaltverhalten getestet werden.

## Patentansprüche

1. Sicherheitsvorrichtung mit einer konfigurierbaren Sicherheitssteuerung (10) und einer Konfigurationseinrichtung, wobei die Sicherheitssteuerung (10) mindestens einen Eingang (18) für den Anschluss eines Sensors (20), mindestens einen Ausgang (22) für den Anschluss eines Aktors (24) sowie eine Steuerungseinheit (14) aufweist, die dafür ausgebildet ist, ein Steuerungsprogramm auszuführen, welches anhand von Logikregeln ein Steuerungssignal an den Ausgängen (22) in Abhängigkeit von Eingangssignalen an den Eingängen (18) erzeugt, wobei die Logikregeln mittels der Konfigurationseinrichtung einstellbar sind,
**dadurch gekennzeichnet,**
**dass** in der Konfigurationseinrichtung ein die Logikregeln repräsentierender Zahlencode erzeugbar ist, dass die Sicherheitssteuerung (10) eine Schnittstelle (30) für die Eingabe des Zahlencodes aufweist und dass die Steuerungseinheit (14) dafür ausgebildet ist, ein Steuerungsprogramm mit den von dem Zahlencode repräsentierten Logikregeln auszuführen.

2. Sicherheitsvorrichtung nach Anspruch 1,
wobei die Schnittstelle (30) für den Anschluss eines mobilen Speichermoduls ausgebildet ist.

3. Sicherheitsvorrichtung nach Anspruch 1,
wobei die Schnittstelle (30) ein Tastenfeld (30a-c) für das Heraufzählen und Herunterzählen eines Zahlencodes aufweist, insbesondere mit einer Taste (30c) zu Wahl der jeweils einzustellenden Ziffer.

4. Sicherheitsvorrichtung nach einem der vorhergehenden Ansprüche,
wobei die Sicherheitssteuerung (10) mehrere zur einer Reihe verbundene Anschlussmodule (16a-d) mit jeweils mindestens einem Eingang (18) für den Anschluss eines Sensors (20) und/oder mindestens einem Ausgang (22) für den Anschluss eines Aktors (24) aufweist.

5. Sicherheitsvorrichtung nach einem der vorhergehenden Ansprüche,
wobei die Konfigurationseinrichtung dafür ausgebildet ist, den Zahlencode mit einer Checksumme zu erzeugen, und wobei die Sicherheitssteuerung (10) dafür ausgebildet ist, die Checksumme eines an der Schnittstelle (30) eingegebenen Zahlencodes zu prüfen.

6. Sicherheitsvorrichtung nach einem der vorhergehenden Ansprüche,
wobei die Sicherheitssteuerung (10) eine Anzeige (32) für Zahlencodes aufweist und die Steuerungseinheit (14) dafür ausgebildet ist, erst dann ein Steuerungsprogramm mit den von einem an der Schnittstelle (30) eingegebenen Zahlencode repräsentierten Logikregeln auszuführen, wenn eine Rückbestätigung eines angezeigten Zahlencodes erfolgt.

7. Sicherheitsvorrichtung nach einem der vorhergehenden Ansprüche,
wobei in dem Zahlencode erste Bitblocks, welche eine Logikfunktion (36), zweite Bitblocks, welche eine Verbindungstabelle der Logikblocks (36), sowie dritte Bitblocks vorgesehen sind, welche den Typ eines Eingangs (38) eines Logikblocks (36) codieren.

8. Sicherheitsvorrichtung nach einem der vorhergehenden Ansprüche,
wobei die Konfigurationseinrichtung dafür ausgebildet ist, Logikregeln mittels einer grafischen Programmieroberfläche durch Auswahl von Logikblocks (36), Eingängen (34) von Logikblocks (36) und Verbindungen zwischen Logikblocks (36) festzulegen und/oder die in einem Zahlencode repräsentierten Logikregeln grafisch darzustellen.

9. Sicherheitsvorrichtung nach einem der vorhergehenden Ansprüche,
wobei die Konfigurationseinrichtung für einen Konsistenztest der Logikregeln ausgebildet ist, insbesondere dafür zu testen, ob alle Eingänge und Ausgänge von Logikblocks (36) verbunden sind.

10. Verfahren zum Konfigurieren einer Sicherheitssteuerung (10), die mittels eines Steuerungsprogramms anhand von Logikregeln ein Steuerungssignal an mindestens einem Ausgang (22) für Aktoren (24) in Abhängigkeit von Eingangssignalen von Sensoren (20) an mindestens einem Eingang (22) für Sensoren (20) erzeugt, wobei während der Konfiguration die Logikregeln des Steuerungsprogramms eingestellt werden,
**dadurch gekennzeichnet,**
**dass** die Logikregeln **dadurch** eingestellt werden, dass zunächst in einer Konfigurationseinrichtung Logikregeln ausgewählt und in einen die Logikregeln repräsentierenden Zahlencode übersetzt werden, anschließend der Zahlencode über eine Schnittstelle (30) in die Sicherheitssteuerung (10) eingegeben und daraufhin von der Sicherheitssteuerung (10) ein Steuerungsprogramm mit den von dem Zahlencode repräsentierten Logikregeln ausgeführt wird.

## Claims

1. A safety apparatus having a configurable safety controller (10) and a configuration means, wherein the safety controller (10) has at least one input (18) for the connection of a sensor (20), at least one output (22) for the connection of an actuator (24), as well as a control unit (14) which is configured to carry out a control program which generates a control signal at the outputs (22) in dependence on input signals at the inputs (18) by means of logic rules, wherein the logic rules can be set by means of the configuration device,
**characterized in that**
a number code can be generated in the configuration device representing the logic rules, **in that** the safety controller (10) includes an interface (30) for the input of the number code and **in that** the control unit (14) is configured to carry out a control program with the logic rules represented by the number code.

2. A safety apparatus in accordance with claim 1,
wherein the interface (30) is configured for the connection of a mobile memory module.

3. A safety apparatus in accordance with claim 1,
wherein the interface (30) includes a key field (30a-c) for the counting up and counting down of a number code, in particular with a button (30c) for the selection of a respective digit to be set.

4. A safety apparatus in accordance with any of the preceding claims,
wherein the safety controller (10) includes a plurality of connection modules (16a-d) connected to a row, each having at least one input (18) for the connection of a sensor (20) and/or at least one output (22) for the connection of an actuator (24).

5. A safety apparatus in accordance with any of the preceding claims,
wherein the configuration means is configured to generate the number code with a checksum, and wherein the safety controller (10) is configured to check the checksum of a number code input at the interface (30).

6. A safety apparatus in accordance with any of the preceding claims,
wherein the safety controller (10) has a display (32) for number codes and the control unit (14) is configured to carry out a control program with logic rules representing a number code input at the interface (30) only after a confirmation of a displayed number code.

7. A safety apparatus in accordance any of the preceding claims,
wherein first bit blocks are provided in the number code with a logic function (36), second bit blocks are provided in the number code having a connection table for a logic block (36), and third bit blocks are provided in the number code which code the type of input (38) of a logic block (36).

8. A safety apparatus in accordance with any of the preceding claims,
wherein the configuration means is configured to determine logic rules by means of a graphical user interface by selection of logic blocks (36), inputs (34) of logic blocks (36) and connections between logic blocks (36), and/or to graphically illustrate the logic rule represented by a number code.

9. A safety apparatus in accordance with any of the preceding claims,
wherein the configuration means is configured for a consistency check of the logic rules, in particular to test whether all inputs and outputs of logic blocks (36) are connected.

10. A method for configuring a safety controller (10) which, by means of a control program, generates a control signal with reference to logic rules at at least one output (22) for actuators (24) in dependence on input signals of sensors (20) at at least one input (22) for sensors (20), wherein during the configuration the logic rules of the control program are set,
**characterized in that**
the logic rules are set by initially selecting logic rules in a configuration means and translating them into a number code representing the logic rules, subsequently the number code is input into the safety controller (10) via an interface (30), and then a control program having the logic rules represented by the number code is carried out by the safety controller (10).

## Revendications

1. Dispositif de sécurité comprenant une commande configurable (10) et un système de configuration, dans lequel la commande (10) comprend au moins une entrée (18) pour le branchement d'un capteur (20), au moins une sortie (22) pour le branchement d'un actionneur (24) ainsi qu'une unité de commande (14) qui est réalisée pour exécuter un programme de commande, celui-ci engendrant au moyen de règles logiques un signal de commande au niveau des sorties (22) en fonction de signaux d'entrée au niveau des entrées (18), dans lequel les règles logiques peuvent être établies au moyen du système de configuration, **caractérisé en ce que**
un code numérique représentatif des règles logiques est susceptible d'être engendré dans le système de configuration,
**en ce que** la commande (10) comprend une interface (30) pour la saisie du code numérique, et
**en ce que** l'unité de commande (14) est réalisée pour exécuter un programme de commande avec les règles logiques représentées par le code numérique.

2. Dispositif de sécurité selon la revendication 1,
dans lequel l'interface (30) est réalisée pour le branchement d'un module de mémoire mobile.

3. Dispositif de sécurité selon la revendication 1,
dans lequel l'interface (30) comprend un champ de touches (30a-c) pour incrémenter et décrémenter un code numérique, en particulier avec une touche (30c) pour le choix du chiffre respectif qu'il s'agit de régler.

4. Dispositif de sécurité selon l'une des revendications précédentes,
dans lequel la commande (10) comprend plusieurs modules de branchement (16a-d) reliés pour former une rangée, comprenant respectivement au moins une entrée (18) pour le branchement d'un capteur (20) et/ou au moins une sortie (22) pour le branchement d'un actionneur (24).

5. Dispositif de sécurité selon l'une des revendications précédentes, dans lequel le système de configuration est réalisé pour engendrer le code numérique avec une somme de contrôle (checksum), et dans lequel la commande (10) est réalisée pour vérifier la somme de contrôle d'un code numérique saisi au niveau de l'interface (30).

6. Dispositif de sécurité selon l'une des revendications précédentes, dans lequel la commande (10) comprend un affichage (32) pour des codes numériques, et l'unité de commande (14) est réalisée pour exécuter un programme de commande avec des règles logiques représentées par un code numérique saisi au niveau de l'interface (30) uniquement lorsqu'une confirmation d'un code numérique affiché a eu lieu.

7. Dispositif de sécurité selon l'une des revendications précédentes, dans lequel des premiers blocs de bits qui codent une fonction logique (36), des seconds blocs de bits qui codent une table de liaison des blocs logiques (37), et des troisièmes bloc de bits qui codent le type d'une entrée (38) d'un bloc logique (36) sont prévus dans le code numérique.

8. Dispositif de sécurité selon l'une des revendications précédentes, dans lequel le système de configuration est réalisé pour déterminer des règles logiques au moyen d'une interface de programmation graphique par choix de blocs logiques (36), d'entrées (34) de blocs logiques (36) et de liaisons entre blocs logiques (36) et/ou pour représenter de manière graphique les règles logiques représentées dans un code numérique.

9. Dispositif de sécurité selon l'une des revendications précédentes, dans lequel le système de configuration est réalisé pour un test de consistance des règles logiques, en particulier pour tester si toutes les entrées et toutes les sorties de blocs logiques (36) sont reliées.

10. Procédé pour configurer une commande de sécurité (10) qui, au moyen d'un programme de commande en s'aidant de règles logiques, engendre un signal de commande au niveau d'au moins une sortie (22) pour des actionneurs (24) en fonction de signaux d'entrée de capteurs (20) au niveau d'au moins une entrée (22) pour des capteurs (20), dans lequel les règles logiques du programme de commande sont établies pendant la configuration,
**caractérisé en ce que**
les règles logiques sont établies du fait que l'on choisit tout d'abord des règles logiques dans un système de configuration et on les traduit en un code numérique représentant les règles logiques, on saisit ensuite le code numérique dans la commande de sécurité (10) via une interface (30), et ensuite un programme de commande avec les règles logiques représentées par le code numérique est exécuté par la commande de sécurité (10).
